# EUROPEAN PATENT SPECIFICATION

(11) **EP 3 013 607 B1**
(45) Date of publication and mention of the grant of the patent: **10.05.2017**
(21) Application number: 14780447.0
(22) Date of filing: 30.09.2014
(51) Int. Cl.: B60C 11/24

(54) **SYSTEM AND METHOD FOR DETERMINING A THICKNESS OF AT LEAST ONE TIRE OF A VEHICLE**
SYSTEM UND VERFAHREN ZUR ERKENNUNG EINER REIFENWANDSTÄRKE
SYSTÈME ET PROCÉDÉ POUR DÉTERMINER L'ÉPAISSEUR DE PAROI D'UN PNEUMATIQUE

(30) Priority: 30.09.2013 EP 13464013; 24.09.2014 EP 14464007
(43) Date of publication of application: 04.05.2016
(60) Divisional application: 17154029.7
(73) Proprietor: Continental Automotive GmbH, 30165 Hannover (DE)
(72) Inventor: ARDELEAN, Darius, Bogdan, R-300344 Timisoara (RO); CIMPONERIU, Andrei, R-300344 Timisoara (RO)
(86) International application number: PCT/EP2014/070889
(87) International publication number: WO 2015/044443

(56) References cited:
- JP-A- 2005 186 749
- US-A1- 2008 168 833

## Description

The present invention relates to a method for determining a thickness of at least one tire of a vehicle during an operation of the vehicle, a computer program product and a system for determining a thickness of at least one tire of a vehicle during an operation of the vehicle.

EP 0 972 658 B1 discloses a method for the determination of tread depth in a vehicle tire during travel, in which in an initializing phase the tires mounted on a vehicle are identified with respect to their relevant data, the tire form slip of the driven wheels is determined for certain driving conditions and corresponding to the currently existing driving conditions are evaluated using different weightings and from the evaluated tire form slip and a characteristic curve stored in the vehicle corresponding to the identified tire and taking account of the rubber mixture employed, the age of the tire, its dimensions and tread form, information on the present tread depth of the tire is given out.

US 2008/168833 A1 discloses a method for determining a thickness of at least one tire of a vehicle according to the preamble of independent claim 1.

JP 2005 186749 A discloses a wheel condition amount sensor that detects the wheel condition amount such as air pressure and temperature. A ground-contact condition detection part detects the ground-contact condition of a part for receiving ground-contact force from ground (referred to as "ground-contact detection position") by rotation of the wheel, i.e., one position in a circumferential direction of the wheel. When the ground-contact force to the ground-contact detection part is detected, a transmitter transmits the wheel condition amount detected by the wheel condition amount sensor to a receiver at a vehicle body side through an antenna by feeding of power from the battery. The number receiving the ground-contact force by the ground-contact detection part is increased and frequency of transmission of the wheel condition amount by the transmitter is increased in proportion to the speed of a vehicle.

An object of the present invention is to provide a method for determining a thickness of at least one tire of a vehicle during an operation of the vehicle, a computer program product and a system for determining a thickness of at least one tire of a vehicle during an operation of the vehicle which can be performed using fewer processing resources.

This object is solved by the subject matter of the independent claims. Further advantageous features are the subject matter of the dependent claims.

A method for determining a thickness of at least one tire of a vehicle during an operation of the vehicle is provided. The at least one tire comprises a tire wall having an inner side and an outer side opposite the inner side. The method comprises transmitting a first beam of ultrasonic waves having a first phase by an ultrasonic transmitter arranged on the inner side of the tire wall, wherein the first beam of ultrasonic waves is transmitted through the tire wall. The method further comprises receiving a second beam of ultrasonic waves having a second phase by an ultrasonic receiver arranged on the inner side of the tire wall, wherein the second beam of ultrasonic waves is reflected through the tire wall by a surface arranged outside of the at least one tire. Moreover, the method comprises determining at least one first parameter selected from a time period between transmitting the first beam of ultrasonic waves and receiving the second beam of ultrasonic waves and a phase shift between the first phase and the second phase. The method further comprises determining a thickness of the at least one tire based on the at least one determined first parameter.

Thus, the thickness of the at least one tire is determined based on the determined time period between transmitting the first beam of ultrasonic waves transmitted by the ultrasonic transmitter arranged on the inner side and receiving the second beam of ultrasonic waves received by the ultrasonic receiver arranged on the inner side and/or based on the determined phase shift between the first phase of the first beam of ultrasonic waves and the second phase of the second beam of ultrasonic waves. The thickness of the at least one tire thus can be determined during an operation of the vehicle by evaluating data acquired by an ultrasonic sensor arranged on the inner side of the tire wall. Therefore, the method does not require stored data about the past life of the vehicle, data about specific road conditions as well as data on the effect of aging, which have an impact on tire wear and may not be available.

In an embodiment, the step of receiving the second beam of ultrasonic waves comprises receiving a beam of ultrasonic waves being reflected through the tire wall by a surface arranged in direct contact with the outer side. Thereby, the thickness of the at least one tire can be determined with very high accuracy.

In a further embodiment, the step of receiving the second beam of ultrasonic waves comprises receiving a beam of ultrasonic waves being reflected through the tire wall by a road surface. This embodiment enables the thickness of the at least one tire to be determined in a direct way and with very high accuracy.

In another embodiment, the step of receiving the second beam of ultrasonic waves comprises receiving a beam of ultrasonic waves being reflected through the tire wall by air surrounding the outer side of the tire wall, i.e. being reflected by an interface between the outer side of the tire wall and air surrounding the outer side of the tire wall. In this embodiment, the second beam of ultrasonic waves is reflected due to the discontinuity in ultrasound propagation at the tire/air interface. This embodiment enables the thickness of the at least one tire to be determined in a direct way and with very high accuracy during a main part of a revolution of the tire.

In a further embodiment, the step of determining the thickness of the at least one tire comprises determining a thickness of the tire wall of the at least one tire based on the at least one determined first parameter. The thickness of the tire wall of the at least one tire thus can be determined during an operation of the vehicle.

The at least one tire comprises a tread having a tread pattern with an inner side and an outer side opposite the inner side. According to the invention, the method further comprises the steps of:
- receiving a third beam of ultrasonic waves having a third phase by the ultrasonic receiver arranged on the inner side of the tire wall, the third beam of ultrasonic waves being reflected through the tire wall by the inner side of the tread pattern,
- determining at least one second parameter selected from a time period between transmitting the first beam of ultrasonic waves and receiving the third beam of ultrasonic waves and a phase shift between the first phase and the third phase,
- determining a thickness of the tread pattern based on the at least one determined first parameter and the at least one determined second parameter.

The thickness of the tread pattern of the at least one tire thus can be determined during an operation of the vehicle.

The method may further comprise determining that the ultrasonic transmitter is arranged adjacent the surface. In this embodiment, the first beam of ultrasonic waves is transmitted whilst the ultrasonic transmitter is arranged adjacent the surface. This enables the accuracy of determining the thickness of the at least one tire to be further increased.

The step of transmitting the first beam of ultrasonic waves may comprise transmitting a pulsed beam of ultrasonic waves whilst the ultrasonic transmitter is arranged adjacent the surface. Thereby, the processing resources required to carry out the method may be further reduced.

In a further embodiment, the steps of transmitting the first beam of ultrasonic waves and receiving the second beam of ultrasonic waves are performed repeatedly and the step of determining the at least one first parameter comprises determining a plurality of values for the at least one first parameter. In this embodiment, the method further comprises identifying a value of the plurality of determined values for the at least one first parameter which is determined whilst the ultrasonic transmitter is arranged adjacent the surface. Thereby, the thickness of the tire can be determined with high accuracy, in particular when using a continuous beam of ultrasonic waves for the first beam of ultrasonic waves.

The step of identifying the value of the plurality of determined values for the at least one first parameter which is determined whilst the ultrasonic transmitter is arranged adjacent the surface may comprise determining a minimum value of the plurality of determined values for the at least one first parameter. This method measures the tire thickness directly.

In a further embodiment, the steps of transmitting the first beam of ultrasonic waves and receiving the second beam of ultrasonic waves and the third beam of ultrasonic waves are performed repeatedly. In said embodiment, the step of determining the at least one first parameter comprises determining a plurality of values for the at least one first parameter and the step of determining the at least one second parameter comprises determining a plurality of values for the at least one second parameter. In this embodiment, the method further comprises identifying a value of the plurality of determined values for the at least one first parameter and a value of the plurality of determined values for the at least one second parameter which are determined whilst the ultrasonic transmitter is arranged adjacent the surface. Thereby, the thickness of the tread pattern can be determined with high accuracy from the inside of the tire while the vehicle is running.

The method may further comprise transmitting the determined thickness of the at least one tire, in particular the determined thickness of the tire wall and/or the determined thickness of the tread pattern to at least one driver assistance system of the vehicle. In this embodiment, the determined thickness of the tire is thus provided to the at least one driver assistance system. Thereby, the operation of the driver assistance system can be adapted to the determined thickness. The at least one driver assistance system may be selected from the group consisting of an anti-lock braking system, an electronic stability control, which is also referred to as electronic stability program, and an emergency braking system.

In an embodiment, the method further comprises issuing a warning signal if the determined thickness of the at least one tire, in particular the determined thickness of the tire wall and/or the determined thickness of the tread pattern is less than a first predetermined threshold value. Thereby, the passengers of the vehicle, in particular the driver of the vehicle, may be advised of a low thickness of the tire. Moreover, the warning signal may be transmitted to further vehicles by a vehicle-to-vehicle communication device.

The method may further comprise notifying a service unit if the determined thickness of the at least one tire, in particular the determined thickness of the tire wall and/or the determined thickness of the tread pattern is less than a second predetermined threshold value. The second predetermined threshold value may be equal to or may be different from the first predetermined threshold value. By notifying a service unit, an appointment for exchanging the tire may be initiated automatically.

A computer program product is also provided that comprises code tangibly embodied thereon, that when executed on a processor, causes the processor to perform the method of one of the embodiments described above.

A system is also provided for determining a thickness of at least one tire of a vehicle during an operation of the vehicle. The at least one tire comprises a tire wall having an inner side and an outer side opposite the inner side. The system comprises at least one ultrasonic sensor mountable on the inner side of the tire wall. The at least one ultrasonic sensor comprises an ultrasonic transmitter for transmitting a first beam of ultrasonic waves having a first phase through the tire wall and an ultrasonic receiver for receiving a second beam of ultrasonic waves having a second phase reflected through the tire wall by a surface arranged outside of the at least one tire. The system further comprises first determining means for determining at least one first parameter selected from a time period between transmitting the first beam of ultrasonic waves and receiving the second beam of ultrasonic waves and a phase shift between the first phase and the second phase. Moreover, the system comprises second determining means for determining a thickness of the at least one tire based on the at least one determined first parameter.

In an embodiment, the second determining means is configured to determine a thickness of the tire wall of the at least one tire based on the at least one determined first parameter.

The at least one tire comprises a tread having a tread pattern with an inner side and an outer side opposite the inner side. According to the invention, the ultrasonic receiver is configured to receive a third beam of ultrasonic waves having a third phase, the third beam of ultrasonic waves being reflected through the tire wall by the inner side of the tread pattern. Moreover, the first determining means is configured to determine at least one second parameter selected from a time period between transmitting the first beam of ultrasonic waves and receiving the third beam of ultrasonic waves and a phase shift between the first phase and the third phase and the second determining means is configured to determine a thickness of the tread pattern based on the at least one determined first parameter and the at least one determined second parameter.

In an embodiment, the system further comprises third determining means for determining that the ultrasonic transmitter is arranged adjacent the surface.

The third determining means may comprise at least one acceleration sensor and/or at least one shock sensor. Thereby, determining that the ultrasonic transmitter is arranged adjacent the surface can be performed in a simple way.

In an embodiment, the system further comprises transmitting means for transmitting the determined thickness of the at least one tire, in particular the determined thickness of the tire wall and/or the determined thickness of the tread pattern to at least one interface of the vehicle.

Embodiments will now be described with reference to the accompanying drawings.
- Figure 1A: is a flowchart illustrating a method for determining a thickness of at least one tire of a vehicle during an operation of the vehicle according to a first embodiment.
- Figure 1B: is a flowchart illustrating a method for determining a thickness of at least one tire of a vehicle during an operation of the vehicle according to a second embodiment.
- Figure 2A: is a flowchart illustrating a method for determining a thickness of at least one tire of a vehicle during an operation of the vehicle according to a third embodiment.
- Figure 2B: is a flowchart illustrating a method for determining a thickness of at least one tire of a vehicle during an operation of the vehicle according to a forth embodiment.
- Figure 3A: illustrates a schematic diagram of a vehicle.
- Figure 3B: illustrates a schematic diagram of one of the wheels of the vehicle illustrated in Figure 3A.
- Figure 3C: illustrates a schematic enlargement of a section of Figure 3B.
- Figure 4: illustrates a schematic diagram of a system for determining a thickness of at least one tire of a vehicle during an operation of the vehicle according to an embodiment.

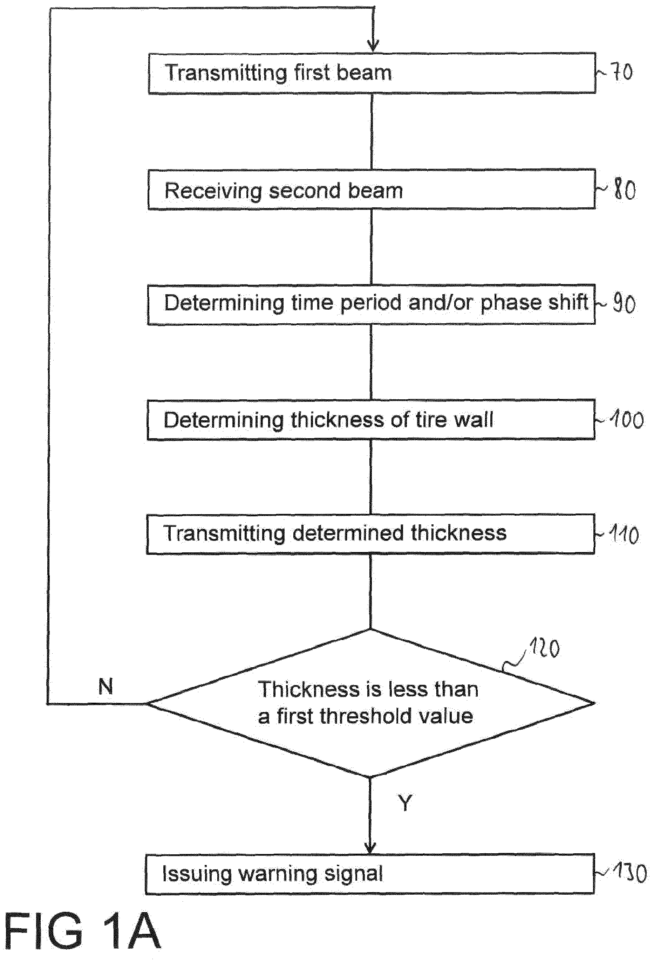

Figure 1A is a flowchart illustrating a method for determining a thickness of at least one pneumatic tire of a vehicle during an operation of the vehicle according to a first embodiment. The vehicle may be a motor vehicle, in particular a passenger car or a commercial road vehicle.

The at least one pneumatic tire comprises a tire wall having an inner side and an outer side opposite the inner side. Typically, the outer side of the tire wall provides a tread of the tire.

In step 70, during the operation of the vehicle, a first beam of ultrasonic waves having a first phase is transmitted by an ultrasonic transmitter arranged on the inner side of the tire wall. The ultrasonic transmitter is arranged on the inner side in such a way that the first beam of ultrasonic waves is transmitted through the tire wall. Moreover, in step 70, a time measurement may be triggered when the first beam of ultrasonic waves is transmitted.

In step 80, a second beam of ultrasonic waves having a second phase is received by an ultrasonic receiver arranged on the inner side of the tire wall. The second beam of ultrasonic waves is reflected through the tire wall by a surface arranged outside of the at least one tire. The surface may be a road surface on which the tire travels. Moreover, the surface may be an interface between the outer side of the tire wall and air surrounding the outer side of the tire wall. The ultrasonic receiver is arranged on the inner side in such a way that the second beam of ultrasonic waves reflected through the tire wall may be received and detected by the ultrasonic receiver. When the second beam of ultrasonic waves is received by the ultrasonic receiver, the time measurement which was started during step 70 is stopped.

In step 90, a time period between transmitting the first beam of ultrasonic waves and receiving the second beam of ultrasonic waves and/or a phase shift between the first phase and the second phase is determined. In the illustrated embodiment, the time period between transmitting the first beam of ultrasonic waves and receiving the second beam of ultrasonic waves is given by the value of the time measurement started during step 70 and stopped during step 80. The phase shift between the first phase and the second phase may be determined by determining the first phase of the first beam of ultrasonic waves, determining the second phase of the second beam of ultrasonic waves and determining a phase difference between the first phase and the second phase.

In step 100, a thickness of the tire wall of the at least one tire is determined based on the determined time period between transmitting the first beam of ultrasonic waves and receiving the second beam of ultrasonic waves and/or based on the determined phase shift between the first phase and the second phase. In the illustrated embodiment, the thickness of the tire wall may be determined by multiplying the determined time period by the speed of the ultrasonic waves and by dividing the result by two. Moreover, the thickness of the tire wall may be determined by multiplying the determined phase shift by half the wavelength of the ultrasonic waves and by dividing the result by 2·π.

In step 110, the determined thickness of the tire wall is transmitted to at least one driver assistance system of the vehicle. Thereby, the operation of the driver assistance system may be adapted to the determined thickness. The at least one driver assistance system may be selected from the group consisting of an anti-lock braking system, an electronic stability control, which is also referred to as electronic stability program, and an emergency braking system.

In step 120, the method further comprises determining if the determined thickness of the tire wall is less than a first predetermined threshold value. The first predetermined threshold value may be for example 15 mm.

If, in step 120, it is determined that the determined thickness of the tire wall is not less than the first predetermined threshold value, steps 70 to 120 are performed repeatedly.

If, however, in step 120, it is determined that the determined thickness of the tire wall is less than the first predetermined threshold value, a warning signal is issued in step 130. Issuing the warning signal may comprise issuing an acoustic and/or optic warning signal. Thereby, the passengers of the vehicle, in particular the driver of the vehicle, may be advised of a low thickness of the tire wall. Moreover, the warning signal may be transmitted to further vehicles by a vehicle-to-vehicle communication device.

The method may further comprise determining if the determined thickness of the tire wall is less than a second predetermined threshold value, for example 14 mm, and a service unit may be notified automatically, if the determined thickness of the tire wall is less than the second predetermined threshold value.

If the steps of transmitting the first beam of ultrasonic waves and receiving the second beam of ultrasonic waves are performed repeatedly, a plurality of time periods and/or a plurality of phase shifts may be determined. In particular, a plurality of time periods and/or phase shifts may be determined, if the first beam of ultrasonic waves is a continuous beam transmitted during at least one revolution of the pneumatic tire. The method then further comprises identifying a time period of the plurality of determined time periods and/or identifying a phase shift of the plurality of determined phase shifts which is determined whilst the ultrasonic transmitter is arranged adjacent the surface which may be the road surface on which the tire travels or the interface between the outer side of the tire wall and air surrounding the outer side of the tire wall, for example by determining a minimum value of the plurality of determined time periods and/or by determining a minimum value of the plurality of determined phase shifts.

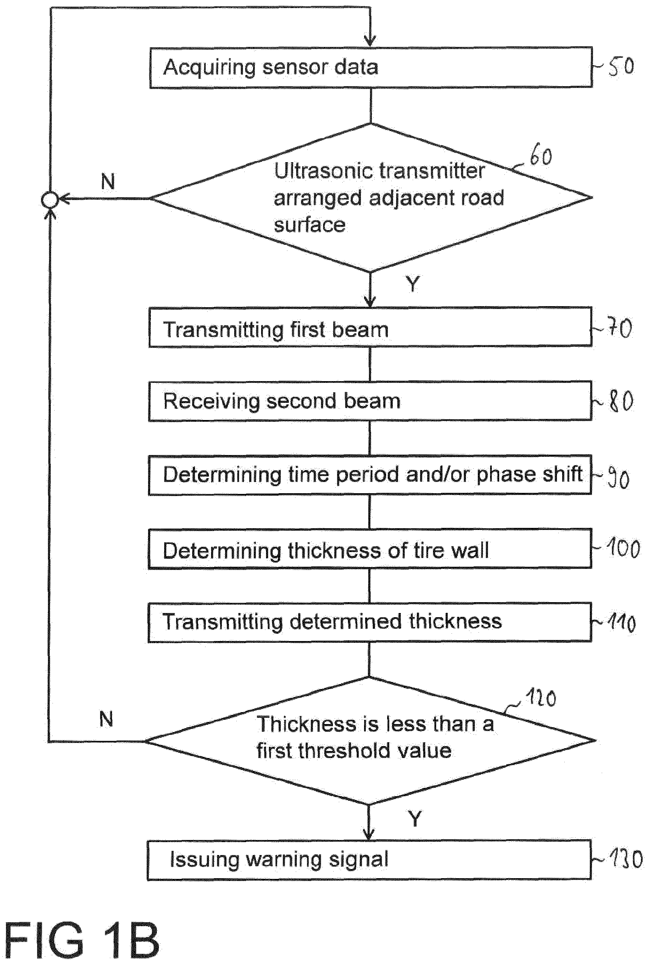

Figure 1B is a flowchart illustrating a method for determining a thickness of at least one pneumatic tire of a vehicle during an operation of the vehicle according to a second embodiment. The vehicle may be a motor vehicle, in particular a passenger car or a commercial road vehicle.

The at least one pneumatic tire comprises a tire wall having an inner side and an outer side opposite the inner side. Typically, the outer side of the tire wall provides a tread of the tire. An ultrasonic sensor comprising an ultrasonic transmitter and an ultrasonic receiver is mounted on the inner side.

In step 50, during the operation of the vehicle, sensor data is acquired in order to determine if the ultrasonic transmitter is arranged adjacent an actual contact patch of the at least one pneumatic tire, i.e. the portion of the tread of the at least one pneumatic tire that is in actual contact with a road surface on which the vehicle travels. The contact patch is also referred to as footprint of the at least one pneumatic tire. In the illustrated embodiment, in order to determine if the ultrasonic transmitter is arranged adjacent the contact patch, sensor data acquired by at least one acceleration sensor and/or at least one shock sensor which is arranged on the inner side of the tire wall is used.

Based on the sensor data acquired in step 50, it is determined in step 60, if the ultrasonic transmitter is arranged adjacent the actual contact patch and thus if the ultrasonic transmitter is arranged adjacent the road surface which is in contact with the contact patch.

If, in step 60, it is determined that the ultrasonic transmitter is not arranged adjacent the road surface, the steps 50 and 60 are performed repeatedly.

If, however, in step 60, it is determined that the ultrasonic transmitter is arranged adjacent the road surface, a first beam of ultrasonic waves having a first phase is transmitted by the ultrasonic transmitter in step 70. The ultrasonic transmitter is arranged on the inner side of the tire wall in such a way that the first beam of ultrasonic waves is transmitted through the tire wall. In the illustrated embodiment, a pulsed beam of ultrasonic waves is transmitted in step 70. Moreover, in step 70, a time measurement may be triggered when the first beam of ultrasonic waves is transmitted.

In step 80, a second beam of ultrasonic waves having a second phase is received by the ultrasonic receiver. The second beam of ultrasonic waves is reflected through the tire wall by the road surface arranged outside of the at least one tire. The ultrasonic receiver is arranged on the inner side of the tire wall in such a way that the second beam of ultrasonic waves reflected through the tire wall may be received and detected by the ultrasonic receiver. In the illustrated embodiment, the second beam of ultrasonic waves is also a pulsed beam of ultrasonic waves. When the second beam of ultrasonic waves is received by the ultrasonic receiver, the time measurement which was started during step 70 is stopped.

In step 90, a time period between transmitting the first pulsed beam of ultrasonic waves and receiving the second pulsed beam of ultrasonic waves and/or a phase shift between the first phase and the second phase is determined. In the illustrated embodiment, the time period between transmitting the first pulsed beam of ultrasonic waves and receiving the second pulsed beam of ultrasonic waves is given by the value of the time measurement started during step 70 and stopped during step 80. The phase shift between the first phase and the second phase may be determined by determining the first phase of the first beam of ultrasonic waves, determining the second phase of the second beam of ultrasonic waves and determining a phase difference between the first phase and the second phase.

In step 100, a thickness of the tire wall of the at least one tire is determined based on the determined time period between transmitting the first pulsed beam of ultrasonic waves and receiving the second pulsed beam of ultrasonic waves and/or based on the determined phase shift between the first phase and the second phase. In the illustrated embodiment, the thickness of the tire wall may be determined by multiplying the determined time period by the speed of the ultrasonic waves and by dividing the result by two. Moreover, the thickness of the tire wall may be determined by multiplying the determined phase shift by half the wavelength of the ultrasonic waves and by dividing the result by 2·π.

In step 110, the determined thickness of the tire wall is transmitted to at least one driver assistance system of the vehicle. Step 110 of the second embodiment corresponds to step 110 of the first embodiment illustrated in Figure 1A.

In step 120, the method further comprises determining if the determined thickness of the tire wall is less than a first predetermined threshold value. The first predetermined threshold value may be for example 15 mm.

If, in step 120, it is determined that the determined thickness of the tire wall is not less than the first predetermined threshold value, steps 70 to 120 are performed repeatedly.

If, however, in step 120, it is determined that the determined thickness of the tire wall is less than the first predetermined threshold value, a warning signal is issued in step 130. Step 130 of the second embodiment corresponds to step 130 of the first embodiment illustrated in Figure 1A.

In the illustrated embodiment, the first beam of ultrasonic waves having a first phase is transmitted by the ultrasonic transmitter in step 70 if, in step 60, it is determined that the ultrasonic transmitter is arranged adjacent the road surface, and no beam of ultrasonic waves is transmitted by the ultrasonic transmitter if, in step 60, it is determined that the ultrasonic transmitter is not arranged adjacent the road surface.

In a further embodiment, the first beam of ultrasonic waves having a first phase is transmitted by the ultrasonic transmitter in step 70 if, in step 60, it is determined that the ultrasonic transmitter is not arranged adjacent the road surface, and no beam of ultrasonic waves is transmitted by the ultrasonic transmitter if, in step 60, it is determined that the ultrasonic transmitter is arranged adjacent the road surface. In this embodiment, the second beam of ultrasonic waves is reflected due to the discontinuity in ultrasound propagation at the tire/air interface. This embodiment enables the thickness of the at least one tire to be determined in a direct way and with very high accuracy during a main part of the revolution of the tire.

The aforementioned embodiments thereby enable an automatic tire worn-out detection and driver information about the tire usage status and tire remaining life time based on ultrasonic waves by measuring a distance from an ultrasonic transducer to the road surface, having the tire rubber between. An electronic wireless module comprising the ultrasonic transducer mounted in the inner side of the tire, for example vulcanized in the inner side of the tire, and oriented to the exterior of the tire rolling way, is used in order to transmit the ultrasonic wave in the ground direction when the ultrasonic transducer reaches the lower position on the wheel while spinning. The transducer will send an ultrasonic wave and the reflected wave in different material will be analyzed, taking into account that the final material by which the ultrasonic wave is reflected is the road asphalt material. In this way, the distance from the ultrasonic transducer to the road asphalt is given by the tire width, i.e. the thickness of the tire wall, and the tire width can be calculated or estimated. The tire usage and tire remaining life time may be calculated by measuring the feedback from the ultrasonic transducer mounted on the tire rolling way. The information may be sent via radio frequency to a car receiver. The driver of the car may be informed and can replace the obsolete tire. The ultrasonic transducer may be mounted on a printed circuit board of the wireless module and process the aforementioned data.

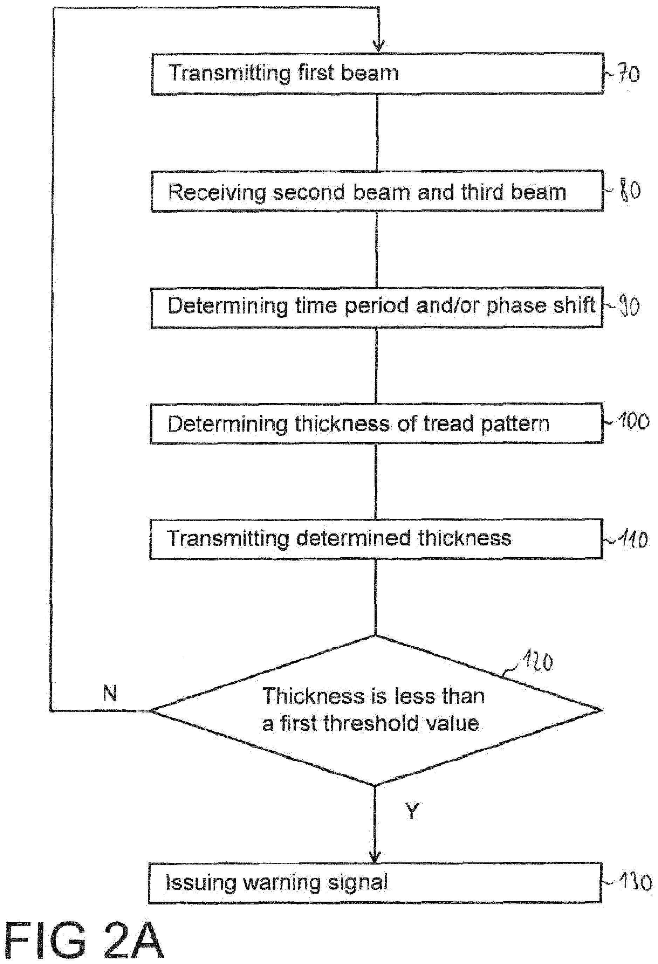

Figure 2A is a flowchart illustrating a method for determining a thickness of at least one pneumatic tire of a vehicle during an operation of the vehicle according to a third embodiment. The vehicle may be a motor vehicle, in particular a passenger car or a commercial road vehicle.

The at least one pneumatic tire comprises a tire wall having an inner side and an outer side opposite the inner side. Moreover, the tire comprises a tread having a tread pattern with an inner side and an outer side opposite the inner side. Typically, the tread pattern is formed by grooves provided in the tire wall, thereby providing tread blocks between adjacent grooves, wherein the inner side of the tread pattern is provided by the bottom of the grooves.

In step 70, during the operation of the vehicle, a first beam of ultrasonic waves having a first phase is transmitted by an ultrasonic transmitter arranged on the inner side of the tire wall. The ultrasonic transmitter is arranged on the inner side in such a way that the first beam of ultrasonic waves is transmitted through the tire wall. Moreover, in step 70, a time measurement may be triggered when the first beam of ultrasonic waves is transmitted.

In step 80, a second beam of ultrasonic waves having a second phase is received by an ultrasonic receiver arranged on the inner side of the tire wall. The second beam of ultrasonic waves is reflected through the tire wall by a surface arranged outside of the at least one tire. The ultrasonic receiver is arranged on the inner side of the tire wall in such a way that the second beam of ultrasonic waves reflected through the tire wall may be received and detected by the ultrasonic receiver. Moreover, in step 80, a third beam of ultrasonic waves having a third phase is received by the ultrasonic receiver arranged on the inner side of the tire wall. The third beam of ultrasonic waves is reflected through the tire wall by the inner side of the tread pattern. Since the inner side of the tread pattern is positioned closer to the inner side of the tire wall than the surface arranged outside of the at least one tire, the third beam is received by the ultrasonic receiver first and then the second beam is received by the ultrasonic receiver.

When the second beam of ultrasonic waves is received by the ultrasonic receiver, the time measurement which was started during step 70 is stopped.

In step 90, a time period between transmitting the first beam of ultrasonic waves and receiving the second beam of ultrasonic waves and a time period between transmitting the first beam of ultrasonic waves and receiving the third beam of ultrasonic waves and/or a phase shift between the first phase and the second phase and a phase shift between the first phase and the third phase is determined. In the illustrated embodiment, the time period between transmitting the first beam of ultrasonic waves and receiving the second beam of ultrasonic waves is given by the value of the time measurement started during step 70 and stopped during step 80. Moreover, the time period between transmitting the first beam of ultrasonic waves and receiving the third beam of ultrasonic waves is also determined using the time measurement started during step 70. The phase shift between the first phase and the second phase may be determined by determining the first phase of the first beam of ultrasonic waves, determining the second phase of the second beam of ultrasonic waves and determining a phase difference between the first phase and the second phase. Moreover, the phase shift between the first phase and the third phase may be determined by determining the first phase of the first beam of ultrasonic waves, determining the third phase of the third beam of ultrasonic waves and determining a phase difference between the first phase and the third phase.

In step 100, a thickness of the tread pattern of the at least one tire is determined based on the determined time period between transmitting the first beam of ultrasonic waves and receiving the second beam of ultrasonic waves and the determined time period between transmitting the first beam of ultrasonic waves and receiving the third beam of ultrasonic waves and/or based on the determined phase shift between the first phase and the second phase and the determined phase shift between the first phase and the third phase. In the illustrated embodiment, the thickness of the tread pattern may be determined by subtracting the determined time period between transmitting the first beam of ultrasonic waves and receiving the third beam of ultrasonic waves from the determined time period between transmitting the first beam of ultrasonic waves and receiving the second beam of ultrasonic waves and by multiplying the determined time period by the speed of the ultrasonic waves and by additionally dividing the result by two. Moreover, the thickness of the tread pattern may be determined by determining the phase shift between the third phase and the second phase and by multiplying the determined phase shift by half the wavelength of the ultrasonic waves and by dividing the result by 2·π.

In step 110, the determined thickness of the tread pattern is transmitted to at least one driver assistance system of the vehicle. Thereby, the operation of the driver assistance system may be adapted to the determined thickness. The at least one driver assistance system may be selected from the group consisting of an anti-lock braking system, an electronic stability control, which is also referred to as electronic stability program, and an emergency braking system.

In step 120, the method further comprises determining if the determined thickness of the tread pattern is less than a first predetermined threshold value. The first predetermined threshold value may be for example 5 mm.

If, in step 120, it is determined that the determined thickness of the tread pattern is not less than the first predetermined threshold value, steps 70 to 120 are performed repeatedly.

If, however, in step 120, it is determined that the determined thickness of the tread pattern is less than the first predetermined threshold value, a warning signal is issued in step 130. Issuing the warning signal may comprise issuing an acoustic and/or optic warning signal. Thereby, the passengers of the vehicle, in particular the driver of the vehicle, may be advised of a low thickness of the tread pattern. Moreover, the warning signal may be transmitted to further vehicles by a vehicle-to-vehicle communication device.

The method may further comprise determining if the determined thickness of the tread pattern is less than a second predetermined threshold value, for example 4 mm, and a service unit may be notified automatically, if the determined thickness of the tread pattern is less than the second predetermined threshold value.

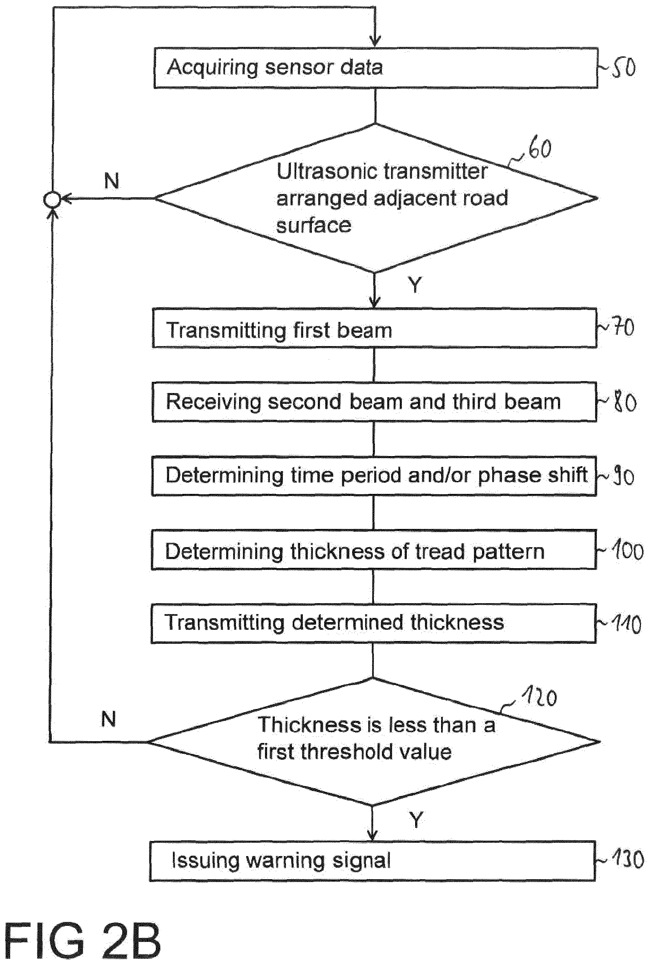

Figure 2B is a flowchart illustrating a method for determining a thickness of at least one pneumatic tire of a vehicle during an operation of the vehicle according to a forth embodiment. The vehicle may be a motor vehicle, in particular a passenger car or a commercial road vehicle.

The at least one pneumatic tire comprises a tire wall having an inner side and an outer side opposite the inner side. Moreover, the tire comprises a tread having a tread pattern with an inner side and an outer side opposite the inner side. Typically, the tread pattern is formed by grooves provided in the tire wall, thereby providing tread blocks between adjacent grooves, wherein the inner side of the tread pattern is provided by the bottom of the grooves.

In step 50, during the operation of the vehicle, sensor data is acquired in order to determine if the ultrasonic transmitter is arranged adjacent an actual contact patch of the at least one pneumatic tire, i.e. the portion of the tread of the at least one pneumatic tire that is in actual contact with a road surface on which the vehicle travels. The contact patch is also referred to as footprint of the at least one pneumatic tire. In the illustrated embodiment, in order to determine if the ultrasonic transmitter is arranged adjacent the contact patch, sensor data acquired by at least one acceleration sensor and/or at least one shock sensor which is arranged on the inner side of the tire wall is used.

Based on the sensor data acquired in step 50, it is determined in step 60, if the ultrasonic transmitter is arranged adjacent the actual contact patch and thus if the ultrasonic transmitter is arranged adjacent the road surface which is in contact with the contact patch.

If, in step 60, it is determined that the ultrasonic transmitter is not arranged adjacent the road surface, the steps 50 and 60 are performed repeatedly.

If, however, in step 60, it is determined that the ultrasonic transmitter is arranged adjacent the road surface, a first beam of ultrasonic waves having a first phase is transmitted by the ultrasonic transmitter in step 70. In the illustrated embodiment, a pulsed beam of ultrasonic waves is transmitted in step 70. Moreover, in step 70, a time measurement may be triggered when the first beam of ultrasonic waves is transmitted.

The method according to the forth embodiment additionally comprises steps 80 to 130, wherein the steps 80 to 130 of the forth embodiment illustrated in Figure 2B correspond to the steps 80 to 130 of the third embodiment illustrated in Figure 2A and are not explained again in order to avoid repetition.

The illustrated embodiments thereby enable the use of a direct method to measure tread depth, in particular the use of an ultrasound flaw measuring method, in a setup that does not require human manipulation of the transducer by mounting the sensor on the interior of the tire and which can be performed automatically while the vehicle is running without requiring any change in the tire material. As already mentioned above, since the ultrasonic wave has some spatial spread, it will be reflected by both the outer part of the tread pattern and by the bottom of the grooves forming the inner part of the tread pattern. By separating these two echoes in the reflected signal and by measuring the time distance between them, the tread depth can be measured directly by multiplying the propagation time by the propagation speed of ultrasound in the tire material, i.e. in rubber.

The propagation speed may be influenced in particular by the temperature of the tire and by rubber aging. In order to compensate this influence, a speed calibration method, also referred to as self-calibrating procedure, can be performed to provide corrections in this respect. The method can be based on the propagation of the same ultrasonic wave through the same material, i.e. rubber, in two different segments. One of the segments is subject to wear, for example a tread block, the other one can be, for instance, but not limited to, the rubber thickness between plies of the tire and the bottom of the grooves of the tread pattern. This volume is not subject to wear and may be used as a reference. If the size of this reference is not known, it may be calculated when a new tire is mounted, if the tread depth or tire thickness is known.

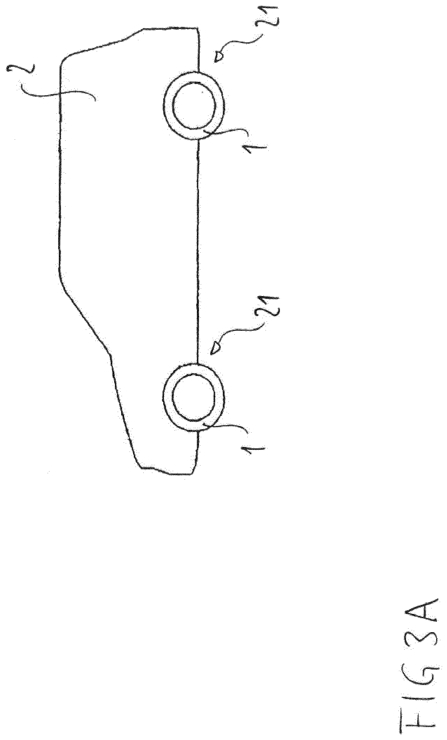

Figure 3A illustrates a schematic diagram of a vehicle 2.

In the illustrated embodiment, the vehicle 2 is a passenger car. The vehicle 2 comprises four wheels 21, of which a front wheel and a rear wheel are illustrated in Figure 3A. The wheels 21 each comprise a pneumatic tire 1. Further details are explained in connection with the following figures.

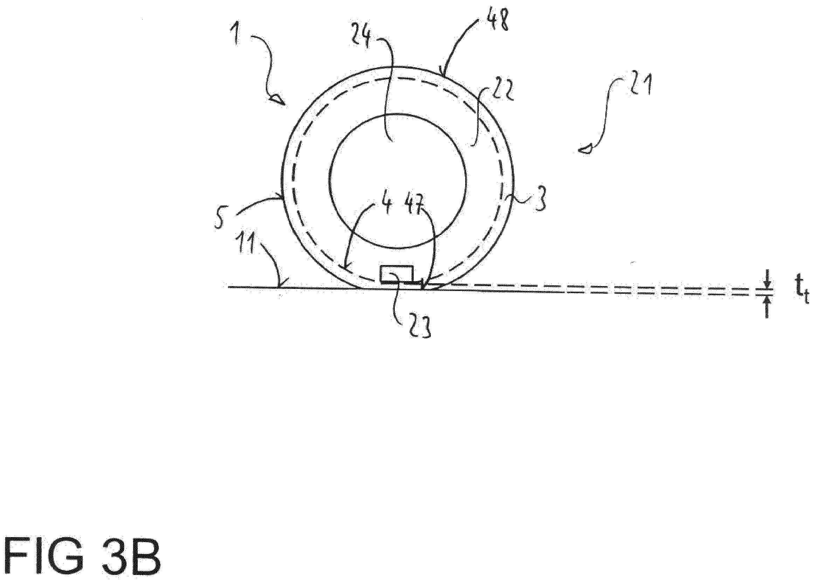

Figure 3B illustrates a schematic enlarged diagram of one of the wheels 21 of the vehicle illustrated in Figure 3A. Components with the same function as in Figure 3A are designated with the same reference signs and are not explained again in the following.

As illustrated in Figure 3B, the pneumatic tire 1 of the wheel 21 comprises a tire wall 3. The tire wall 3 has an inner side 4 and an outer side 5 opposite the inner side 4. The inner side 4 is illustrated schematically by a dashed line and the outer side 5 is illustrated schematically by a continuous line in Figure 3B. The outer side 5 provides a tread 48 of the pneumatic tire 1. Moreover, the pneumatic tire 1 comprises a sidewall 22. The pneumatic tire 1 is mounted on a rim 24 of the wheel 21.

A tire module 23 is mounted on the inner side 4 of the tire wall 3. For example, the tire module 23 is vulcanized on the inner side 4. As explained in more detail below, a thickness tₜ of the tire wall 3 and/or a thickness of a tread pattern of the tread 48 may be determined by the tire module 23, when the tire module 23 is arranged adjacent a road surface 11 on which the pneumatic tire 1 travels, i.e. when the tire module 23 is arranged adjacent an actual contact patch 47 of the pneumatic tire 1.

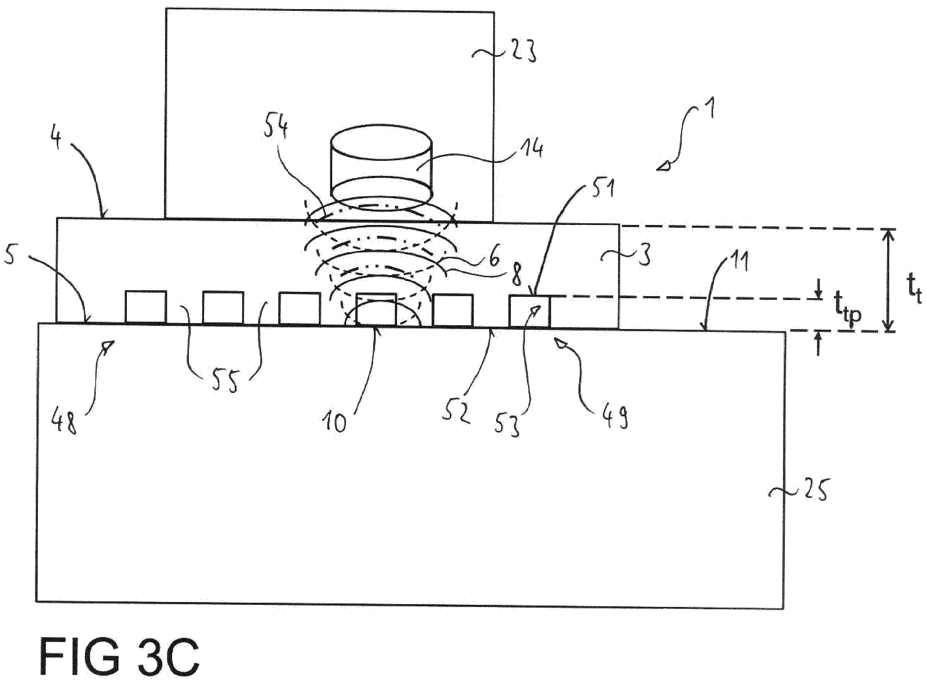

Figure 3C illustrates a schematic enlargement of a section of Figure 3B. Components with the same function as in Figure 3B are designated with the same reference signs and are not explained again in the following.

As illustrated in Figure 3C, the tread 48 of the pneumatic tire 1 comprises a tread pattern 49 with an inner side 51 and an outer side 52 opposite the inner side 51, wherein the inner side 51 of the tread pattern 49 is arranged closer to the inner side 4 of the tire wall 3 than the outer side 52 of the tread pattern 49. The tread pattern 48 is formed by grooves 53 provided in the tire wall 3, thereby providing tread blocks 55 between adjacent grooves 53, wherein the inner side 51 of the tread pattern 48 is provided by the bottom of the grooves 53. The tire module 23 comprises an ultrasonic sensor 14. The ultrasonic sensor 14 comprises an ultrasonic transmitter for transmitting a first beam 6 of ultrasonic waves having a first phase through the tire wall 3. The first beam 6 of ultrasonic waves may be a continuous beam of ultrasonic waves or a pulsed beam of ultrasonic waves. Moreover, the ultrasonic sensor 14 comprises an ultrasonic receiver for receiving a second beam 8 of ultrasonic waves reflected through the tire wall 3 by a surface 10 arranged outside of the tire 1 and for determining a phase of the second beam 8 of ultrasonic waves and for receiving a third beam 54 of ultrasonic waves reflected through the tire wall 3 by the inner side 51 of the tread pattern 49 and for determining a phase of the third beam 54 of ultrasonic waves. The first beam 6 of ultrasonic waves is illustrated schematically by a dashed line, the second beam 8 of ultrasonic waves is illustrated schematically by a continuous line and the third beam 54 of ultrasonic waves is illustrated schematically by a dot and dash line in Figure 3C. For reasons of clarity, the ultrasonic transmitter and the ultrasonic receiver of the ultrasonic sensor 14 are not illustrated in detail in Figure 3C. The surface 10 is provided by a road surface 11 of a road 25 on which the vehicle comprising the tire is travelling.

A reflection of the first beam 6 of ultrasonic waves by the surface 10 occurs due to a difference between the density of the material of the tire wall 3 which typically is rubber and the density of the material of the road 25 which for example may be concrete or asphalt. The reflected second beam 8 of ultrasonic waves has a second phase which, compared to the first phase of the first beam 6 of ultrasonic waves, is shifted by a phase shift. The time period between transmitting the first beam 6 of ultrasonic waves by the ultrasonic transmitter and receiving the second beam 8 of ultrasonic waves by the ultrasonic receiver as well as the value of the phase shift between the first beam 6 of ultrasonic waves and the second beam 8 of ultrasonic waves depend on the distance between the ultrasonic sensor 14 and the surface 10. Thus, the thickness tₜ of the tire wall 3 may be determined based on the time period between transmitting the first beam 6 of ultrasonic waves and receiving the second beam 8 of ultrasonic waves and/or based on the phase shift between the first phase and the second phase, wherein a distance between the ultrasonic sensor 14 and the inner side 4 may additionally be taken into account.

In the illustrated embodiment, the surface 10 is provided by the road surface 11 of the road 25 on which the vehicle comprising the tire is travelling. In a further embodiment, the surface may be provided by an interface between the outer side 5 of the tire wall 3 and air surrounding the outer side 5 of the tire wall 3. In this embodiment, a reflection of the first beam 6 of ultrasonic waves occurs due to a difference between the density of the material of the tire wall 3 which typically is rubber and the density of the air surrounding the tire wall 3.

Moreover, a reflection of the first beam 6 of ultrasonic waves by the inner side 51 of the tread pattern 49 occurs due to a difference between the density of the material of the tire wall 3 and the density of air being in the grooves 53. The reflected third beam 54 of ultrasonic waves has a third phase which, compared to the first phase of the first beam 6 of ultrasonic waves, is shifted by a phase shift. The time period between transmitting the first beam 6 of ultrasonic waves by the ultrasonic transmitter and receiving the third beam 54 of ultrasonic waves by the ultrasonic receiver as well as the value of the phase shift between the first beam 6 of ultrasonic waves and the third beam 54 of ultrasonic waves depend on the distance between the ultrasonic sensor 14 and the inner side 51. Thus, a thickness tₜₚ of the tread pattern 49 of the tread 48 may be determined based on the time period between transmitting the first beam 6 of ultrasonic waves and receiving the second beam 8 of ultrasonic waves and the time period between transmitting the first beam 6 of ultrasonic waves and receiving the third beam 54 of ultrasonic waves, i.e. based on the time period between receiving the third beam 54 of ultrasonic waves and receiving the second beam 8 of ultrasonic waves and/or based on the phase shift between the second phase and the third phase, wherein a distance between the ultrasonic sensor 14 and the inner side 4 may additionally be taken into account.

In addition to the tread 48 having the tread pattern 49 made of the tread blocks 55 and the grooves 53, the tire wall 3 may contain further layers, for example, starting from the inner side 4, radial plies, steel belts and cap plies. Thus, several echoes may result from the further layers and may be captured by the ultrasonic sensor 14 as a plurality of beams of ultrasonic waves. In order to determine the thickness tₜₚ of the tread pattern 49 of the tread 48, in this embodiment, the two echoes received last by the ultrasonic sensor 14 after transmitting the first beam 6 of ultrasonic waves are selected as the second beam 8 of ultrasonic waves and the third beam 54 of ultrasonic waves, respectively.

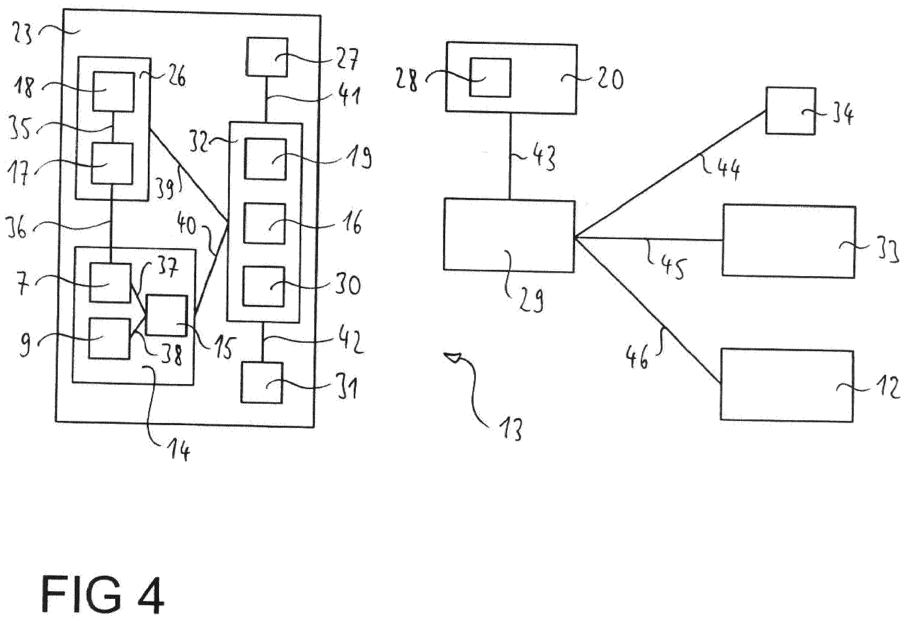

Figure 4 illustrates a schematic diagram of a system 13 for determining a thickness of at least one tire of a vehicle during an operation of the vehicle according to an embodiment. Components with the same function as in Figures 3A to 3C are designated with the same reference signs and are not explained again in the following. For reasons of clarity, the vehicle is not illustrated in detail in Figure 4.

The system 13 comprises at least one tire module 23. Typically, the system 13 comprises one tire module 23 for each of the tires of the vehicle. For reasons of clarity, only one tire module 23 is illustrated in detail in Figure 4.

The tire module 23 is mountable on the inner side of the respective tire and comprises an ultrasonic sensor 14. The ultrasonic sensor 14 comprises an ultrasonic transmitter 7 for transmitting a first beam of ultrasonic waves at a frequency of for example 20 kHz through the tire wall and an ultrasonic receiver 9 for receiving a second beam of ultrasonic waves at the same frequency reflected through the tire wall by a surface arranged outside of the respective tire and for receiving a third beam of ultrasonic waves at the same frequency reflected through the tire wall by the inner side of the tread pattern. Moreover, in the illustrated embodiment, the ultrasonic receiver 9 is configured to determine a phase of the second beam of ultrasonic waves and a phase of the third beam of ultrasonic waves. A frequency of about 20 kHz is very suitable, since the ultrasonic reflectivity of typical road materials, for example concrete or asphalt, is very high for said frequency range.

The tire module 23 further comprises first determining means 15 configured to determine a time period between transmitting the first beam of ultrasonic waves and receiving the second beam of ultrasonic waves and a time period between transmitting the first beam of ultrasonic waves and receiving the third beam of ultrasonic waves and/or configured to determine a phase shift between the first beam of ultrasonic waves and the second beam of ultrasonic waves and a phase shift between the first beam of ultrasonic waves and the third beam of ultrasonic waves. In the illustrated embodiment, the first determining means 15 is provided within the ultrasonic sensor 14 and is connected to the ultrasonic transmitter 7 by a signal line 37 and to the ultrasonic receiver 9 by a signal line 38.

The tire module 23 further comprises second determining means 16 configured to determine a thickness of the at least one tire, in particular a thickness of the tire wall of the respective tire based on the determined time period between transmitting the first beam of ultrasonic waves and receiving the second beam of ultrasonic waves and/or based on the determined phase shift between the first beam of ultrasonic waves and the second beam of ultrasonic waves. The second determining means 16 is provided within a processing unit 32 of the tire module 23.

In the illustrated embodiment, the second determining means 16 is additionally configured to determine a thickness of the tread pattern of the respective tire based on the determined time period between transmitting the first beam of ultrasonic waves and receiving the second beam of ultrasonic waves and the determined time period between transmitting the first beam of ultrasonic waves and receiving the third beam of ultrasonic waves and/or based on the determined phase shift between the first phase and the second phase and the determined phase shift between the first phase and the third phase.

In the illustrated embodiment, the tire module 23 further comprises third determining means 17 configured to determine that the ultrasonic transmitter 7 is arranged adjacent the surface outside of the respective tire. The third determining means 17 is provided within a sensor unit 26 which comprises a sensor 18 connected to the third determining means 17 by a signal line 35. The sensor 18 may be an acceleration sensor and/or a shock sensor and may detect vibrations which occur when the tire module 23 is arranged adjacent the actual contact surface of the respective tire. The third determining means 17 may determine that the ultrasonic transmitter 7 is arranged adjacent the surface outside of the respective tire if the acceleration determined by the sensor 18 is higher than a predetermined threshold value. If this is the case, the third determining means 17 may trigger a transmission of a pulsed beam of ultrasonic waves by the ultrasonic transmitter 7. For this purpose, the third determining means 17 is connected to the ultrasonic transmitter 7 by a signal line 36.

In the illustrated embodiment, the tire module 23 which may also be referred to as Wheel Unit (WU) is part of a tire pressure monitoring system (TPMS) of the vehicle. To this end, the tire module 23 further comprises a pressure sensor 27 for determining a pressure of the pneumatic tire and a temperature sensor 31 for determining a temperature of the respective pneumatic tire. The pressure sensor 27 is connected to the processing unit 32 by a signal line 41 and the temperature sensor 31 is connected to the processing unit 32 by a signal line 42. Moreover, the sensor unit 26 is connected to the processing unit 32 by a signal line 39 and the ultrasonic sensor 14 is connected to the processing unit 32 by a signal line 40.

The processing unit 32 further comprises an energy converter 30 providing power to the aforementioned components of the tire module 23 by converting mechanical energy into electrical energy. For example, the energy converter 30 may be a bending piezoelectric stripe. Thereby, a sufficient amount of electrical energy for operating the ultrasonic sensor 14 may be provided and the tire module 23 may thus be operational over the entire lifetime of the respective tire. Additionally, the processing unit 32 may further comprise an electrical energy storage device providing power to the aforementioned components of the tire module 23, for example a battery. Moreover, the processing unit 32 comprises transmitting means 19 configured to wirelessly transmit the determined thickness of the at least one tire, in particular the determined thickness of the tire wall and/or the determined thickness of the tread pattern as well as the determined pressure and the determined temperature of the pneumatic tire to at least one interface 20 of the vehicle. The interface 20 comprises receiving means 28 configured to wirelessly receive the aforementioned data.

The determined thickness of the at least one tire, in particular the determined thickness of the tire wall and/or the determined thickness of the tread pattern of the respective tire as well as the determined pressure and the determined temperature of the pneumatic tire may be provided to a control unit 29 of the vehicle connected to the interface 20 by a signal line 43.

In the illustrated embodiment, the control unit 29 transmits the determined thickness of the at least one tire, in particular the determined thickness of the tire wall and/or the determined thickness of the tread pattern of the respective tire via a signal line 46 to at least one driver assistance system 12 of the vehicle. The at least one driver assistance system 12 may be selected from the group consisting of an anti-lock braking system, an electronic stability control, which is also referred to as electronic stability program, and an emergency braking system.

Moreover, the control unit 29 determines if the determined thickness of the at least one tire, in particular the determined thickness of the tire wall and/or the determined thickness of the tread pattern is less than a first predetermined threshold value. The first predetermined threshold value may be for example 15 mm in case of the tire wall and 5 mm in case of the tread pattern. If the control unit 29 determines that the determined thickness is less than the first predetermined threshold value, a warning signal is issued by an output device 33 connected to the control unit 29 by a signal line 45. The output device 33 may issue an acoustic and/or optic warning signal. Moreover, the warning signal may be transmitted to further vehicles by a communication unit 34 connected to the control unit 29 by a signal line 44 and comprising a vehicle-to-vehicle communication device.

In the illustrated embodiment, the control unit 29 further determines if the determined thickness of the at least one tire, in particular the determined thickness of the tire wall and/or the determined thickness of the tread pattern is less than a second predetermined threshold value, for example 14 mm in case of the tire wall and 4 mm in case of the tread pattern. If the control unit 29 determines that the determined thickness is less than the second predetermined threshold value, a service unit may be notified automatically by the communication unit 34.

### List of reference signs

- 1: tire
- 2: vehicle
- 3: tire wall
- 4: inner side
- 5: outer side
- 6: first beam
- 7: ultrasonic transmitter
- 8: second beam
- 9: ultrasonic receiver
- 10: surface
- 11: road surface
- 12: driver assistance system
- 13: system
- 14: ultrasonic sensor
- 15: first determining means
- 16: second determining means
- 17: third determining means
- 18: sensor
- 19: transmitting means
- 20: interface
- 21: wheel
- 22: sidewall
- 23: tire module
- 24: rim
- 25: road
- 26: sensor unit
- 27: pressure sensor
- 28: receiving means
- 29: control unit
- 30: energy converter
- 31: temperature sensor
- 32: processing unit
- 33: output device
- 34: communication unit
- 35: signal line
- 36: signal line
- 37: signal line
- 38: signal line
- 39: signal line
- 40: signal line
- 41: signal line
- 42: signal line
- 43: signal line
- 44: signal line
- 45: signal line
- 46: signal line
- 47: contact patch
- 48: tread
- 49: tread pattern
- 50: step
- 51: inner side
- 52: outer side
- 53: groove
- 54: third beam
- 55: tread block
- 60: step
- 70: step
- 80: step
- 90: step
- 100: step
- 110: step
- 120: step
- 130: step

- tₜ: thickness
- tₜₚ: thickness

## Claims

1. A method for determining a thickness of at least one tire (1) of a vehicle (2) during an operation of the vehicle (2), the at least one tire (1) comprising a tire wall (3) having an inner side (4) and an outer side (5) opposite the inner side (4) and the at least one tire (1) comprising a tread (48) having a tread pattern (49) with an inner side (51) and an outer side (52) opposite the inner side (51), the method comprising the steps of:
- transmitting a first beam (6) of ultrasonic waves having a first phase by an ultrasonic transmitter (7) arranged on the inner side (4), the first beam (6) of ultrasonic waves being transmitted through the tire wall (3),
- receiving a second beam (8) of ultrasonic waves having a second phase by an ultrasonic receiver (9) arranged on the inner side (4), the second beam (8) of ultrasonic waves being reflected through the tire wall (3) by a surface (10) arranged outside of the at least one tire (1),
- determining at least one first parameter selected from a time period between transmitting the first beam (6) of ultrasonic waves and receiving the second beam (8) of ultrasonic waves and a phase shift between the first phase and the second phase,
- determining a thickness of the at least one tire (1) based on the at least one determined first parameter,
**characterized in that** the method further comprises the steps of:
- receiving a third beam (54) of ultrasonic waves having a third phase by the ultrasonic receiver (9) arranged on the inner side (4) of the tire wall (3), the third beam (54) of ultrasonic waves being reflected through the tire wall (3) by the inner side (51) of the tread pattern (49),
- determining at least one second parameter selected from a time period between transmitting the first beam (6) of ultrasonic waves and receiving the third beam (54) of ultrasonic waves and a phase shift between the first phase and the third phase,
- determining a thickness of the tread pattern (49) based on the at least one determined first parameter and the at least one determined second parameter.

2. The method according to claim 1, wherein the step of receiving the second beam (8) of ultrasonic waves comprises receiving a beam of ultrasonic waves being reflected through the tire wall (3) by a surface arranged in direct contact with the outer side (5).

3. The method according to claim 1 or claim 2, wherein the step of determining the thickness of the at least one tire (1) comprises determining a thickness of the tire wall (3) of the at least one tire (1) based on the at least one determined first parameter.

4. The method according to one of claims 1 to 3, wherein the method further comprises determining that the ultrasonic transmitter (7) is arranged adjacent the surface (10) and wherein the first beam (6) of ultrasonic waves is transmitted whilst the ultrasonic transmitter (7) is arranged adjacent the surface (10).

5. The method according to claim 4, wherein the step of transmitting the first beam (6) of ultrasonic waves comprises transmitting a pulsed beam of ultrasonic waves whilst the ultrasonic transmitter (7) is arranged adjacent the surface (10).

6. The method according to one of claims 1 to 3, wherein the steps of transmitting the first beam (6) of ultrasonic waves and receiving the second beam (8) of ultrasonic waves are performed repeatedly and wherein the step of determining the at least one first parameter comprises determining a plurality of values for the at least one first parameter and wherein the method further comprises identifying a value of the plurality of determined values for the at least one first parameter being determined whilst the ultrasonic transmitter (7) is arranged adjacent the surface (10).

7. The method according to one of claims 1 to 6, further comprising transmitting the determined thickness to at least one driver assistance system (12) of the vehicle (2).

8. The method according to one of claims 1 to 7, further comprising issuing a warning signal if the determined thickness is less than a first predetermined threshold value.

9. A computer program product, comprising code tangibly embodied thereon, that when executed on a processor, causes the processor to perform a method according to one of claims 1 to 8.

10. A system (13) for determining a thickness of at least one tire (1) of a vehicle (2) during an operation of the vehicle (2), the at least one tire (1) comprising a tire wall (3) having an inner side (4) and an outer side (5) opposite the inner side (4) and the at least one tire (1) comprising a tread (48) having a tread pattern (49) with an inner side (51) and an outer side (52) opposite the inner side (51), the system (13) comprising
- at least one ultrasonic sensor (14) mountable on the inner side (4), wherein the at least one ultrasonic sensor (14) comprises an ultrasonic transmitter (7) for transmitting a first beam (6) of ultrasonic waves having a first phase through the tire wall (3) and an ultrasonic receiver (9) for receiving a second beam (8) of ultrasonic waves having a second phase reflected through the tire wall (3) by a surface (10) arranged outside of the at least one tire (1),
- first determining means (15) for determining at least one first parameter selected from a time period between transmitting the first beam (6) of ultrasonic waves and receiving the second beam (8) of ultrasonic waves and a phase shift between the first phase and the second phase,
- second determining means (16) for determining a thickness of the at least one tire (1) based on the at least one determined first parameter,
**characterized in that**
- the ultrasonic receiver (9) is configured to receive a third beam (54) of ultrasonic waves having a third phase, the third beam (54) of ultrasonic waves being reflected through the tire wall (3) by the inner side (51) of the tread pattern (49),
- the first determining means (17) is configured to determine at least one second parameter selected from a time period between transmitting the first beam (6) of ultrasonic waves and receiving the third beam (54) of ultrasonic waves and a phase shift between the first phase and the third phase and
- the second determining means (16) is configured to determine a thickness of the tread pattern (49) based on the at least one determined first parameter and the at least one determined second parameter.

11. The system according to claim 10, wherein the second determining means (16) is configured to determine a thickness of the tire wall (3) of the at least one tire (1) based on the at least one determined first parameter.

12. The system according to one of claims 10 to 11, further comprising third determining means (17) for determining that the ultrasonic transmitter (7) is arranged adjacent the surface (10).

13. The system according to claim 12, wherein the third determining means (17) comprises at least one acceleration sensor and/or at least one shock sensor.

## Patentansprüche

1. Verfahren zum Bestimmen der Dicke wenigstens eines Reifens (1) eines Fahrzeugs (2) während eines Betriebs des Fahrzeugs (2), wobei der wenigstens eine Reifen (1) eine Reifenwand (3) mit einer Innenseite (4) und einer Außenseite (5) gegenüber der Innenseite (4) besitzt und wobei der wenigstens eine Reifen (1) eine Lauffläche (48) umfasst, die ein Profilmuster (49) mit einer Innenseite (51) und einer Außenseite (52) gegenüber der Innenseite (51) besitzt, wobei das Verfahren die folgenden Schritte umfasst:
- Senden eines ersten Strahls (6) von Ultraschallwellen, die eine erste Phase besitzen, durch einen Ultraschallsender (7), der an der Innenseite (4) angeordnet ist, wobei der erste Strahl (6) von Ultraschallwellen durch die Reifenwand (3) hindurch gesendet wird,
- Empfangen eines zweiten Strahls (8) von Ultraschallwellen, die eine zweite Phase besitzen, durch einen Ultraschallempfänger (9), der an der Innenseite (4) angeordnet ist, wobei der zweite Strahl (8) von Ultraschallwellen durch die Reifenwand (3) hindurch durch eine Oberfläche (10), die sich außerhalb des wenigstens einen Reifens (1) befindet, reflektiert wird,
- Bestimmen wenigstens eines ersten Parameters, der aus einer Zeitdauer zwischen dem Senden des ersten Strahls (6) von Ultraschallwellen und dem Empfangen des zweiten Strahls (8) von Ultraschallwellen und aus einer Phasenverschiebung zwischen der ersten Phase und der zweiten Phase ausgewählt wird,
- Bestimmen einer Dicke des wenigstens einen Reifens (1) anhand des wenigstens einen bestimmten ersten Parameters,
**dadurch gekennzeichnet, dass** das Verfahren ferner die folgenden Schritte umfasst:
- Empfangen eines dritten Strahls (54) von Ultraschallwellen, die eine dritte Phase besitzen, durch den Ultraschallempfänger (9), der an der Innenseite (4) der Reifenwand (3) angeordnet ist, wobei der dritte Strahl (54) von Ultraschallwellen durch die Reifenwand (3) hindurch durch die Innenseite (51) des Profilmusters (49) reflektiert wird,
- Bestimmen wenigstens eines zweiten Parameters, der aus einer Zeitdauer zwischen dem Senden des ersten Strahls (6) von Ultraschallwellen und dem Empfangen des dritten Strahls (54) von Ultraschallwellen und aus einer Phasenverschiebung zwischen der ersten Phase und der dritten Phase ausgewählt wird,
- Bestimmen einer Dicke des Profilmusters (49) anhand des wenigstens einen bestimmten ersten Parameters und des wenigstens einen bestimmten zweiten Parameters.

2. Verfahren nach Anspruch 1, wobei der Schritt des Empfangens des zweiten Strahls (8) von Ultraschallwellen das Empfangen eines Strahls von Ultraschallwellen, die durch die Reifenwand (3) hindurch durch eine Oberfläche, die in direktem Kontakt mit der Außenseite (5) angeordnet ist, reflektiert werden, umfasst.

3. Verfahren nach Anspruch 1 oder Anspruch 2, wobei der Schritt des Bestimmens der Dicke des wenigstens einen Reifens (1) das Bestimmen einer Dicke der Reifenwand (3) des wenigstens einen Reifens (1) anhand des wenigstens einen bestimmten ersten Parameters umfasst.

4. Verfahren nach einem der Ansprüche 1 bis 3, wobei das Verfahren ferner das Bestimmen, dass der Ultraschallsender (7) in der Nähe der Oberfläche (10) angeordnet ist, umfasst und wobei der erste Strahl (6) von Ultraschallwellen gesendet wird, während der Ultraschallsender (7) in der Nähe der Oberfläche (10) angeordnet ist.

5. Verfahren nach Anspruch 4, wobei der Schritt des Sendens des ersten Strahls (6) von Ultraschallwellen das Senden eines gepulsten Strahls von Ultraschallwellen, während der Ultraschallsender (7) in der Nähe der Oberfläche (10) angeordnet ist, umfasst.

6. Verfahren nach einem der Ansprüche 1 bis 3, wobei die Schritte des Sendens des ersten Strahls (6) von Ultraschallwellen und des Empfangens des zweiten Strahls (8) von Ultraschallwellen wiederholt ausgeführt werden und wobei der Schritt des Bestimmens des wenigstens einen ersten Parameters das Bestimmen mehrerer Werte für den wenigstens einen ersten Parameter umfasst und wobei das Verfahren ferner das Identifizieren eines Wertes der mehreren bestimmten Werte für den wenigstens einen ersten Parameter, die bestimmt werden, während der Ultraschallsender (7) in der Nähe der Oberfläche (10) angeordnet ist, umfasst.

7. Verfahren nach einem der Ansprüche 1 bis 6, das ferner das Senden der bestimmten Dicke zu wenigstens einem Fahrerassistenzsystem (12) des Fahrzeugs (2) umfasst.

8. Verfahren nach einem der Ansprüche 1 bis 7, das ferner das Ausgeben eines Warnsignals, falls die bestimmte Dicke geringer als ein erster vorgegebener Schwellenwert ist, umfasst.

9. Computerprogrammprodukt, das Code enthält, der darin nichtflüchtig enthalten ist und der dann, wenn er in einem Prozessor abgearbeitet wird, den Prozessor dazu veranlasst, ein Verfahren nach einem der Ansprüche 1 bis 8 auszuführen.

10. System (13) zum Bestimmen einer Dicke wenigstens eines Reifens (1) eines Fahrzeugs (2) während eines Betriebs des Fahrzeugs (2), wobei der wenigstens eine Reifen (1) eine Reifenwand (3) mit einer Innenseite (4) und einer Außenseite (5) gegenüber der Innenseite (4) umfasst und wobei der wenigstens eine Reifen (1) eine Lauffläche (48) umfasst, die ein Profilmuster (49) mit einer Innenseite (51) und einer Außenseite (52) gegenüber der Innenseite (51) besitzt, wobei das System (13) Folgendes umfasst:
- wenigstens einen Ultraschallsensor (14), der an der Innenseite (4) montierbar ist, wobei der wenigstens eine Ultraschallsensor (14) einen Ultraschallsender (7) zum Senden eines ersten Strahls (6) von Ultraschallwellen, die eine erste Phase besitzen, durch die Reifenwand (3) hindurch und einen Ultraschallempfänger (9) zum Empfangen eines zweiten Strahls (8) von Ultraschallwellen, die eine zweite Phase besitzen und durch die Reifenwand (3) hindurch durch eine Oberfläche (10), die sich außerhalb des wenigstens einen Reifens (1) befindet, reflektiert werden, umfasst,
- erste Bestimmungsmittel (15) zum Bestimmen wenigstens eines ersten Parameters, der aus einer Zeitdauer zwischen dem Senden des ersten Strahls (6) von Ultraschallwellen und dem Empfangen des zweiten Strahls (8) von Ultraschallwellen und aus einer Phasenverschiebung zwischen der ersten Phase und der zweiten Phase ausgewählt ist,
- zweite Bestimmungsmittel (16) zum Bestimmen einer Dicke des wenigstens einen Reifens (1) anhand des wenigstens einen bestimmten ersten Parameters,
**dadurch gekennzeichnet, dass**
- der Ultraschallempfänger (9) konfiguriert ist, einen dritten Strahl (54) von Ultraschallwellen, die eine dritte Phase besitzen, zu empfangen, wobei der dritte Strahl (54) von Ultraschallwellen durch die Reifenwand (3) hindurch durch die Innenseite (51) des Profilmuster (49) reflektiert wird,
- die ersten Bestimmungsmittel (15) konfiguriert sind, wenigstens einen zweiten Parameter zu bestimmen, der aus einer Zeitdauer zwischen dem Senden des ersten Strahls (6) von Ultraschallwellen und dem Empfangen des dritten Strahls (54) von Ultraschallwellen und aus einer Phasenverschiebung zwischen der ersten Phase und der dritten Phase ausgewählt ist, und
- die zweiten Bestimmungsmittel (16) konfiguriert sind, eine Dicke des Profilmusters (49) anhand des wenigstens einen bestimmten ersten Parameters und des wenigstens einen bestimmten zweiten Parameters zu bestimmen.

11. System nach Anspruch 10, wobei die zweiten Bestimmungsmittel (16) konfiguriert sind, eine Dicke der Reifenwand (3) des wenigstens einen Reifens (1) anhand des wenigstens einen bestimmten ersten Parameters zu bestimmen.

12. System nach einem der Ansprüche 10 bis 11, das ferner dritte Bestimmungsmittel (17) umfasst, um zu bestimmen, dass der Ultraschallsender (7) in der Nähe der Oberfläche (10) angeordnet ist.

13. System nach Anspruch 12, wobei die dritten Bestimmungsmittel (17) wenigstens einen Beschleunigungssensor und/oder wenigstens einen Stoßsensor umfassen.

## Revendications

1. Procédé pour déterminer une épaisseur d'au moins un pneu (1) d'un véhicule (2) pendant l'utilisation du véhicule (2), le ou les pneus (1) comportant une paroi (3) de pneu présentant une face intérieure (4) et une face extérieure (5) opposée à la face intérieure (4) et le ou les pneus (1) comportant une bande (48) de roulement dotée d'une sculpture (49) présentant une face intérieure (51) et une face extérieure (52) opposée à la face intérieure (51), le procédé comportant les étapes consistant à :
- faire émettre un premier faisceau (6) d'ondes ultrasonores présentant une première phase par un émetteur ultrasonique (7) disposé sur la face intérieure (4), le premier faisceau (6) d'ondes ultrasonores étant émis à travers la paroi (3) de pneu,
- faire recevoir un deuxième faisceau (8) d'ondes ultrasonores présentant une deuxième phase par un récepteur ultrasonique (9) disposé sur la face intérieure (4), le deuxième faisceau (8) d'ondes ultrasonores étant réfléchi à travers la paroi (3) de pneu par une surface (10) disposée à l'extérieur du ou des pneus (1),
- déterminer au moins un premier paramètre choisi parmi un laps de temps entre l'émission du premier faisceau (6) d'ondes ultrasonores et la réception du deuxième faisceau (8) d'ondes ultrasonores et un déphasage entre la première phase et la deuxième phase,
- déterminer une épaisseur du ou des pneus (1) d'après le ou les premiers paramètres déterminés,
**caractérisé en ce que** le procédé comporte en outre les étapes consistant à :
- faire recevoir un troisième faisceau (54) d'ondes ultrasonores présentant une troisième phase par le récepteur ultrasonique (9) disposé sur la face intérieure (4) de la paroi (3) de pneu, le troisième faisceau (54) d'ondes ultrasonores étant réfléchi à travers la paroi (3) de pneu par la face intérieure (51) de la sculpture (49),
- déterminer au moins un deuxième paramètre choisi parmi un laps de temps entre l'émission du premier faisceau (6) d'ondes ultrasonores et la réception du troisième faisceau (54) d'ondes ultrasonores et un déphasage entre la première phase et la troisième phase,
- déterminer une épaisseur de la sculpture (49) d'après le ou les premiers paramètres déterminés et le ou les deuxièmes paramètres déterminés.

2. Procédé selon la revendication 1, l'étape consistant à recevoir le deuxième faisceau (8) d'ondes ultrasonores comportant la réception d'un faisceau d'ondes ultrasonores qui est réfléchi à travers la paroi (3) de pneu par une surface disposée en contact direct avec la face extérieure (5).

3. Procédé selon la revendication 1 ou la revendication 2, l'étape consistant à déterminer l'épaisseur du ou des pneus (1) comportant la détermination d'une épaisseur de la paroi (3) de pneu du ou des pneus (1) d'après le ou les premiers paramètres déterminés.

4. Procédé selon l'une des revendications 1 à 3, le procédé comportant en outre l'étape consistant à déterminer que l'émetteur ultrasonique (7) est disposé au voisinage de la surface (10) et le premier faisceau (6) d'ondes ultrasonores étant émis tandis que l'émetteur ultrasonique (7) est disposé au voisinage de la surface (10).

5. Procédé selon la revendication 4, l'étape consistant à émettre le premier faisceau (6) d'ondes ultrasonores comportant l'émission d'un faisceau pulsé d'ondes ultrasonores tandis que l'émetteur ultrasonique (7) est disposé au voisinage de la surface (10).

6. Procédé selon l'une des revendications 1 à 3, les étapes consistant à émettre le premier faisceau (6) d'ondes ultrasonores et à recevoir le deuxième faisceau (8) d'ondes ultrasonores étant réalisées de façon répétée et l'étape consistant à déterminer le ou les premiers paramètres comportant la détermination d'une pluralité de valeurs pour le ou les premiers paramètres et le procédé comportant en outre l'identification d'une valeur de la pluralité de valeurs déterminées pour le ou les premiers paramètres qui sont déterminés tandis que l'émetteur ultrasonique (7) est disposé au voisinage de la surface (10).

7. Procédé selon l'une des revendications 1 à 6, comportant en outre l'envoi de l'épaisseur déterminée à au moins un système (12) d'assistance à la conduite du véhicule (2).

8. Procédé selon l'une des revendications 1 à 7, comportant en outre l'émission d'un signal d'avertissement si l'épaisseur déterminée est inférieure à une première valeur seuil prédéterminée.

9. Produit de programme informatique, comportant du code incorporé sur celui-ci de manière tangible, qui, lorsqu'il est exécuté sur un processeur, amène le processeur à réaliser un procédé selon l'une des revendications 1 à 8.

10. Système (13) pour déterminer une épaisseur d'au moins un pneu (1) d'un véhicule (2) pendant l'utilisation du véhicule (2), le ou les pneus (1) comportant une paroi (3) de pneu présentant une face intérieure (4) et une face extérieure (5) opposée à la face intérieure (4) et le ou les pneus (1) comportant une bande (48) de roulement dotée d'une sculpture (49) présentant une face intérieure (51) et une face extérieure (52) opposée à la face intérieure (51), le système (13) comportant
- au moins un capteur ultrasonique (14) pouvant être monté sur la face intérieure (4), le ou les capteurs ultrasoniques (14) comportant un émetteur ultrasonique (7) servant à émettre un premier faisceau (6) d'ondes ultrasonores présentant une première phase à travers la paroi (3) de pneu et un récepteur ultrasonique (9) servant à recevoir un deuxième faisceau (8) d'ondes ultrasonores présentant une deuxième phase réfléchi à travers la paroi (3) de pneu par une surface (10) disposée à l'extérieur du ou des pneus (1),
- un premier moyen (15) de détermination servant à déterminer au moins un premier paramètre choisi parmi un laps de temps entre l'émission du premier faisceau (6) d'ondes ultrasonores et la réception du deuxième faisceau (8) d'ondes ultrasonores et un déphasage entre la première phase et la deuxième phase,
- un deuxième moyen (16) de détermination servant à déterminer une épaisseur du ou des pneus (1) d'après le ou les premiers paramètres déterminés,
**caractérisé en ce que**
- le récepteur ultrasonique (9) est configuré pour recevoir un troisième faisceau (54) d'ondes ultrasonores présentant une troisième phase, le troisième faisceau (54) d'ondes ultrasonores étant réfléchi à travers la paroi (3) de pneu par la face intérieure (51) de la sculpture (49),
- le premier moyen (15) de détermination est configuré pour déterminer au moins un deuxième paramètre choisi parmi un laps de temps entre l'émission du premier faisceau (6) d'ondes ultrasonores et la réception du troisième faisceau (54) d'ondes ultrasonores et un déphasage entre la première phase et la troisième phase et
- le deuxième moyen (16) de détermination est configuré pour déterminer une épaisseur de la sculpture (49) d'après le ou les premiers paramètres déterminés et le ou les deuxièmes paramètres déterminés.

11. Système selon la revendication 10, le deuxième moyen (16) de détermination étant configuré pour déterminer une épaisseur de la paroi (3) de pneu du ou des pneus (1) d'après le ou les premiers paramètres déterminés.

12. Système selon l'une des revendications 10 à 11, comportant en outre un troisième moyen (17) de détermination servant à déterminer que l'émetteur ultrasonique (7) est disposé au voisinage de la surface (10).

13. Système selon la revendication 12, le troisième moyen (17) de détermination comportant au moins un capteur d'accélération et/ou au moins un capteur de choc.
